# EUROPEAN PATENT APPLICATION

(11) **EP 4 389 696 A1**
(43) Date of publication of application: **26.06.2024**
(21) Application number: 22216625.8
(22) Date of filing: 23.12.2022
(51) Int. Cl.: C01B 3/04, F23D 14/00, F23L 1/00

(54) **PROCESS FOR PRODUCING SYNTHESIS GAS PRODUCT COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: ULBER, Dieter, 60439 Frankfurt / Main (DE); COSCIA, Antonio, 60439 Frankfurt am Main (DE); LODIER, Guillaume, 78350 Jouy-en-Josas (FR)
(74) Representative: Air Liquide

(57) **Abstract**

A process for producing a synthesis gas product comprising hydrogen by an endothermic reaction of a feedstock, said process comprising the following steps:
- Supplying a first fuel gas comprising at least 20% of ammonia at a first flow rate into a combustion chamber,
- Supplying a second fuel gas comprising at least 10% of hydrogen at a second flow rate into the combustion chamber, at least a first portion of one of the fuel gas being delivered separately from the other fuel gas into the reaction chamber,
- Supplying an oxidizing gas stream,
- Performing a combustion of the supplied first fuel gas and the supplied second fuel gas with the supplied oxidizing gas stream in the combustion chamber to provide heat to the endothermic reaction.

## Description

The field of the present invention is that of a process for producing a synthesis gas product comprising hydrogen by an endothermic reaction of a feedstock. The invention also relates to a burner assembly for a heat input to an endothermic reaction furnace. The invention is also directed to a furnace comprises one or a plurality of burner assemblies. The invention also relates to the use of such a burner assembly.

The production of a hydrogen-comprising synthesis gas by an endothermic reaction of a feedstock stream requires heat. Usually, heat is provided by a combustion reaction of a fuel gas in a furnace for heating the ammonia feedstock.

The drawbacks of ammonia as fuel are its poor combustion properties, namely low flame speed, small ignition and explosion window, high ignition temperature resulting in an unstable flame and unwanted emissions, like unconverted ammonia and NOx.

There are several means to improve the combustion behavior like the admixing of other fuels, for example hydrogen, which will lead to a more stable flame, improved flame velocities and influence the NOx formation. However, it is necessary to maintain a fuel tip gas exit velocity over the complete operating window of the equipment in a certain range close to the flame velocity of the gas mixture to ensure a stable flame.

The invention proposes a process for producing a synthesis gas product comprising hydrogen by an endothermic reaction of a feedstock in which a stable hydrogen fuel/ammonia fuel ratio is ensured to avoid an unstable flame and a flame lift-off which can finally extinguish the flame. It leads to an improved ammonia fuel combustion and then a better feedstock conversion into a synthesis product comprising hydrogen.

For this purpose, the invention proposes a process for producing a synthesis gas product, in particular a synthesis gas product comprising hydrogen, by an endothermic reaction of a feedstock, said process comprising the following steps:
- Supplying a first fuel gas comprising at least 20% of ammonia at a first flow rate into a combustion chamber,
- Supplying a second fuel gas comprising at least 10% of hydrogen at a second flow rate into the combustion chamber, at least a first portion of one of the fuel gas being delivered separately from the other fuel gas into the reaction chamber,
- Supplying an oxidizing gas stream,
- Performing a combustion of the supplied first fuel gas and the supplied second fuel gas with the supplied oxidizing gas stream in the combustion chamber to provide heat to the endothermic reaction.

In the present disclosure, the ammonia fuel stream is also referred as ammonia fuel.

In one aspect of the invention, the feedstock is an ammonia feedstock and the endothermic reaction is an endothermic cracking reaction of the ammonia feedstock.

In one aspect of the invention, the oxidizing gas comprises a combustion air.

In one aspect of the invention, the step of supplying the second fuel gas comprises delivering at least a first portion of the second fuel gas separately from the first fuel gas into the combustion chamber..

In one aspect of the invention, the step of supplying the second fuel gas comprises delivering at least a first portion of the first fuel gas separately from the second fuel gas into the combustion chamber..

In one aspect of the invention, the combustion is performed non-catalytically. In other words, the combustion is performed is absence of any catalyst to promote oxidation

In one aspect of the invention, the combustion is performed in at least one fired equipment. The term of fired equipment denotes that the second combustion is made with formation of a flame.

In one aspect of the invention, the first fuel gas and the second fuel gas have a different composition.

In one aspect of the invention, the second fuel gas comprises at least 15% of hydrogen, preferably at least 20%, preferably at least 30%, preferably at least 40%, preferably at least 50%, preferably at least 60%, preferably at least 70%, preferably at least 80%, preferably at least 90%, preferably up to 100% of hydrogen.

In one aspect of the invention, the first fuel gas comprises at least 30% of ammonia, preferably at least 40%, preferably at least 50%, preferably at least 60%, preferably at least 70%, preferably at least 80%, preferably at least 90%, preferably up to 100% of ammonia.

In one aspect of the invention, the first and the second fuel gas and the oxidizing gas are mixed in the combustion chamber so as to obtain a combustion mix.

In one aspect of the invention, the combustion is performed by igniting the combustion mix.

In one aspect of the invention, more than two fuel gases are supplied to the combustion chamber, at least one portion of one of each gas being delivered separately into said combustion chamber.

In one aspect of the invention, more than two fuel gases are supplied to the combustion chamber, each gas being delivered separately into said combustion chamber.

In one aspect of the invention, the process comprises a step of controlling the first flow rate of the first fuel gas and the second flow rate of the second fuel gas. Controlling the flow rates allows the optimization of the velocity of each fuel gas supplied into the combustion chamber in order to keep it in a range close to the flame velocity in the combustion step, and thus the optimization of the combustion.

As alternative or in addition to the step of controlling the first flow rate and the second flow rate, the process comprises a step of supplying a second portion of one of the fuel gas, for example the second fuel gas, along with the other fuel gas, for example the first fuel gas, the second portion of the fuel gas, for example the second fuel gas, being mixed with the other fuel gas, for example the first fuel gas. In particular the supply of the second portion of one of the fuel, for example the second fuel gas, along with the other fuel gas, for example the first fuel gas, is controlled so that a mixture fraction is comprised between 5% and 35%, preferably between 10% and 20%.

In one aspect of the invention, the process comprises a step of supplying a second portion of the second fuel gas along with the first fuel gas, the first fuel gas being mixed with the second portion of the second fuel gas. In particular, the supply of the second portion of the second fuel gas along with the first fuel gas is controlled so that a mixture fraction of the second fuel gas in the first fuel gas is comprised between 5% and 35%, preferably between 10% and 20%.

A mixture of one of the fuel gas, for example the first fuel gas, with the second portion of the other fuel gas, for example the second fuel gas, allows for more flame stability and thus further optimization of the combustion behavior.

In one aspect of the invention, the second fuel gas delivers a hydrogen rich fuel gas to the combustion chamber. In a preferred embodiment, the second fuel gas is injected in the first fuel gas to deliver a hydrogen rich fuel gas in the first fuel gas.

This process ensures a better stabilization of the flame during the combustion: the second fuel gas comprises hydrogen which stabilizes the flame.

In one aspect of the invention, the oxidizing gas is injected to the first and the second fuel gas for performing the combustion in the combustion chamber.

According to one aspect of the invention, the process comprises a conditioning step of the feedstock for example by vaporization, said conditioning step following a feedstock providing step.

According to one aspect of the invention, the endothermic reaction converts the feedstock conditioned in the conditioning step into a synthesis gas product, in particular a synthesis gas product comprising hydrogen.

According to one aspect of the invention, the synthesis gas product comprises hydrogen, nitrogen. In particular, the synthesis gas product comprises an unconverted portion of ammonia. In other words, the synthesis gas product comprises hydrogen, nitrogen and an unconverted portion of the ammonia feedstock being unconverted after the catalytic conversion of the ammonia feedstock.

According to one aspect of the invention, the process comprises a step of releasing the synthesis gas product from a reactor in which the endothermic reaction is performed.

According to one aspect of the invention, the process comprises a step of processing the synthesis gas product following the releasing step. The processing step can be for example a purification step.

According to one aspect of the invention, the step of processing is a purification step following the releasing step, said purification step using a method such as Pressure Swing Adsorption (acronym PSA), cryogenic separation, membranes, Temperature Swing Adsorption (acronym TSA).

According to one aspect of the invention, the feedstock conditioning step comprises vaporizing, preheating or superheating the feedstock.

According to one aspect of the invention, the heat for vaporization, preheating or superheating during the feedstock conditioning step is provided by an external heat source, such as an external firing due to a combustion reaction near the conditioning step.

According to one aspect of the invention, the endothermic reaction is performed in presence of a catalyst that promotes the catalytic conversion.

According to one aspect of the invention, the endothermic reaction is at least partially heated by the combustion of the first fuel gas, the second fuel gas and the oxidizing gas as disclosed above.

The invention also relates to a burner assembly for a heat input to an endothermic reaction furnace, the burner assembly comprising:
- At least one oxidizing gas supply line configured to deliver an oxidizing gas stream into a combustion chamber of the furnace,
- Fuel gas supply lines configured to deliver fuel gas to be combusted in the combustion chamber with the oxidizing gas , among which :
   ∘ A first fuel gas supply line configured to deliver a first fuel gas stream into the combustion chamber,
   ∘ A second fuel gas supply line configured to deliver a second fuel gas stream into the combustion chamber, the second fuel gas supply line being configured to deliver the second fuel gas stream separately from the first fuel gas stream into the combustion chamber,
   ∘ a fuel gas mixture control device arranged to mix a portion of one of the fuel gas streams with the other fuel gas stream in one of the first or second fuel gas supply line.

In one aspect of the invention, the oxidizing gas is a combustion air.

In one aspect of the invention, the second supply line is configured to deliver a first portion of the second fuel gas stream separately from the first fuel gas stream into the combustion chamber. In particular, the fuel gas mixture control device is configured to mix a second portion of the second fuel gas stream with the first fuel gas stream in the first supply line.

In one aspect of the invention, the second supply line is configured to deliver a first portion of the first fuel gas stream separately from the second fuel gas stream into the combustion chamber.

In one aspect of the invention, the fuel gas mixture control device comprises a mixture valve arranged on one of the first or second supply line, in particular a set of mixture valves arranged on at least one of the first or second supply line.

In one aspect of the invention, the burner assembly is configured to be supplied in the first fuel gas at a first flow rate and configured to be supplied in the second fuel gas at a second flow rate.

In one aspect of the invention, the burner is configured to perform a non-catalytic combustion.

In one aspect of the invention, the burner is configured to perform the combustion with the formation of a flame. In other word, the burner is a fired equipment.

In one aspect of the invention, the first and the second fuel gas stream supply lines are adjacent.

In one aspect of the invention, the first fuel gas supply line has a first flow cross section and the second fuel gas supply line has a second flow cross section.

In one aspect of the invention, the first and second fuel gas supply lines are separated by a fluid-tight layer.

In one aspect of the invention, the first and the second fuel gas supply lines are arranged in a co-annular manner.

In one aspect of the invention, the first fuel gas supply line and the second fuel gas supply line are defined by cylinder tubes, the cylinder tube defining the second fuel gas supply line being interlaced within the cylinder tube defining the first fuel gas supply line.

In one aspect of the invention, the first and the second fuel gas supply lines are forming an inner tube.

In one aspect of the invention, the first flow cross section surrounds the second flow cross section.

In one aspect of the invention, the first flow cross section is ring shaped.

In one aspect of the invention, the second flow cross section is ring shaped.

This co-annular arrangement ensures a better stabilization of the flame during the combustion: the second fuel gas comprises hydrogen which stabilizes the flame.

In another aspect of the invention, the second section surrounds the first flow cross section.

According to one aspect of the invention, the oxidizing gas supply line is arranged in a co-annular manner with the first and second fuel gas stream supply lines. In particular, the third flow cross section surrounds the first flow cross section and the second flow cross section.

In one aspect of the invention, the first fuel gas supply line is configured to deliver an ammonia rich fuel gas to the combustion chamber. In a preferred embodiment, the first fuel gas supply line with the first flow cross section surrounding the second flow cross section is configured to deliver an ammonia rich fuel gas stream.

In one aspect of the invention, the second fuel gas supply line is configured to deliver a hydrogen rich fuel gas to the combustion chamber. In a preferred embodiment, the second fuel cross supply line with the second flow cross section surrounded by the first flow cross section is configured to deliver a hydrogen rich fuel gas stream.

In one aspect of the invention, the first fuel gas supply line, the second fuel gas supply line and the oxidizing gas supply line are arranged in a co-annular manner, the oxidizing gas supply line being the outermost supply line.

In one aspect of the invention, the first and the second fuel gas supply lines are fixed to an upper support of the burner, said upper support being arranged to support the supply lines.

In one aspect of the invention, the burner assembly comprises a burner tip for releasing the first and second fuel gas into the combustion chamber, the first and the second fuel gas supply lines being fluidically connected to the burner tip.

In one aspect of the invention, the burner tip comprises at least one first opening, said first opening being connected to the first fuel gas supply line to release the first fuel gas into the combustion chamber.

In one aspect of the invention, the burner tip comprises at least one second opening, said second opening being connected to the second fuel gas supply line to release the second fuel gas into the combustion chamber.

In one aspect of the invention, the burner assembly comprises a heat protection arranged around the supply lines, for example a burner tile, said heat protection being configured to protect said lines against external heat.

In one aspect of the invention, the burner assembly comprises a first flow rate control device arranged to control a first flow rate of the first fuel gas stream and a second flow rate control device arranged to control a second flow rate of the second fuel gas stream.

In one aspect of the invention, the first flow rate control device is fluidically connected to the first fuel gas supply line, and the second flow rate control device is fluidically connected to the second fuel gas supply line.

The invention also relates to a furnace for producing a synthesis gas product comprising hydrogen by an endothermic reaction of a feedstock comprising one or a plurality of burner assemblies as disclosed previously.

The invention also relates to the use of a burner assembly as disclosed previously for producing a synthesis gas product, in particular a synthesis gas product comprising hydrogen, by an endothermic reaction of a feedstock. In particular, the invention relates to the use of a burner assembly as disclosed previously for producing a synthesis gas product comprising hydrogen by an endothermic reaction of cracking an ammonia feedstock.

Further features, details and advantages of the invention will become more clearly apparent from reading the description given below by way of indication with reference to the drawings, in which:
[FIG. 1] is a schematic representation of the process of the present invention,
[Fig. 2] is a schematic view of a burner assembly according to a first embodiment,
[Fig. 3] is a schematic view of a burner assembly according to a second embodiment,
[Fig. 4] is a sectional view of a burner assembly according to a second embodiment,
[Fig. 5] is a focus on the first and second supply lines according to the embodiment of figures 3 and 4,
[Fig. 6] is a schematic view of a furnace of the invention.

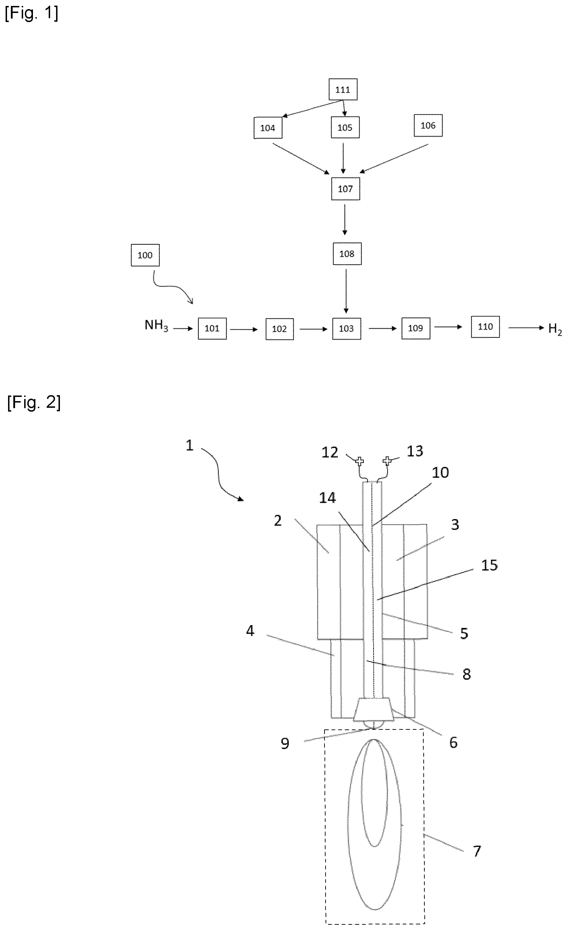

Figure 1 shows a process 100 for producing a synthesis gas product comprising hydrogen by an endothermic cracking reaction of an ammonia feedstock stream. However, it is to be noted that the inventions cover all kinds of endothermic reaction, such as steam methane reforming.

The process comprises the following steps:
- Supplying an ammonia feedstock comprising ammonia,
- Supplying a first fuel gas comprising at least 20% of ammonia at a first flow rate into a combustion chamber 104,
- Supplying a first portion of second fuel gas, said second fuel gas comprising at least 10% of hydrogen, at a second flow rate into the combustion chamber 105, the first portion of the second fuel gas being delivered separately from the first fuel gas into the combustion chamber,
- Supplying a combustion air 106,
- Performing a combustion 107 of the supplied first fuel gas and the supplied second fuel gas with the combustion air in the combustion chamber to provide heat 108 to the endothermic reaction 103.

Such a process leads to the optimization of the combustion. It indeed allows the proper mixing of the first fuel gas, second fuel gas and combustion air at the gas tip exit. The mixing is thus optimized in the combustion chamber, so the generated flame is more stable.

The first and the second fuel gas and the combustion air gas are mixed in the combustion chamber so as to obtain a combustion mix. The combustion 107 is performed by igniting the combustion mix.

The process comprises also a step 111 of controlling the first and the second fuel gas flow rates. Such a controlling step allows to avoid a flame instability due to a first fuel/second fuel, in other words to an ammonia/hydrogen ratio variation.

As alternative or in addition to the step of controlling the first flow rate and the second flow rate 111, the process comprises a step of supplying a second portion of the second fuel gas along with the first fuel gas, the second portion of the second fuel gas being mixed with the first fuel gas.

The supply of the second portion of the second fuel gas along with the first fuel gas is controlled so that a mixture fraction of the second fuel gas in the first fuel gas is comprised between 5% and 35%, preferably between 10% and 20%.

The second fuel gas delivers a hydrogen rich fuel gas to the combustion chamber. In a preferred embodiment, the second fuel gas is injected in the first fuel gas to deliver a hydrogen rich fuel gas in the first fuel gas.

This process ensures a better stabilization of the flame during the combustion: the second fuel gas comprises hydrogen which stabilizes the flame.

The process also comprises the following steps:
- Providing an ammonia feedstock stream 101,
- Conditioning said ammonia feedstock stream 102,
- Releasing the synthesis gas product 109,
- Processing the synthesis gas product 110.

Here, the conditioning step 102 is for example, but not limited to, the vaporization of the ammonia feedstock stream.

This cracking reaction of the ammonia feedstock stream is an endothermic reaction that requires heat. The endothermic cracking reaction is performed in presence of an active catalyst which promotes the cracking reaction of the ammonia feedstock when heat is provided to said endothermic cracking reaction.

The process comprises a releasing step 109 of the synthesis gas product. During this step, the synthesis gas product is released from the unit in which the endothermic cracking reaction occurs to be treated in a processing step 110 if needed. For example, this processing step can be a purification step. This purification step uses classical purification methods, such as such as PSA, cryogenic separation, membranes, TSA. Purified hydrogen is thus obtained.

Figure 2 shows a burner assembly 1 according to a first embodiment. Here the burner assembly 1 comprises a combustion air supply line 3 surrounding a first fuel gas supply line 5 and a second fuel gas supply line 8. The first fuel gas comprises at least 20% of ammonia and the second fuel gas comprises at least 10% of hydrogen. The first fuel gas supply line 5 and the second fuel gas supply line 8 are forming an inner tube 11 and are adjacent. They are separated by a fluid-tight layer 10. The combustion air supply line 3, the first fuel gas supply line 5 and the second air supply line 8 are arranged to deliver the combustion air, the first fuel gas and the second fuel gas separately to the combustion chamber 7 in which the combustion of the first and second fuel gas is performed. The burner assembly 1 comprises a flame holder 6 arranged to generate a flame in the combustion chamber 7.

The fuel gas supply lines comprise a fuel gas mixture control device arranged to mix a portion of one of the fuel gas streams with the other fuel gas stream in one of the first or second fuel gas supply line.

The first fuel gas and the second fuel gas exit from the first fuel gas supply line 5 and the second fuel gas supply line 8 by a burner tip 9 comprising openings. Each of the burner tip openings is adjusted in size to meet the specific and for combustion optimum velocity requirements of the different fuel gas, before releasing them into the combustion chamber 7 and where the flow of the hydrogen comprised in the second fuel gas is controlled in order to admix a portion of the hydrogen containing fuel gas to the ammonia comprised in the first fuel gas in function of the availability, amount and flow ratio of the two fuel gas.

The first fuel supply line 5, the second fuel supply line 8, the combustion air supply line 3 are arranged in a casing 1.

The burner assembly comprises a heat protection 4 arranged around the supply lines 3, 5, 8, for example a burner tile, said heat protection being configured to protect said lines against external heat.

A flow control device for each fuel gas allows to control the first fuel gas and second fuel gas rates. The first flow control device 12 for the first fuel gas is fluidically connected to the first fuel gas supply line 5, and the second flow control device 13 for the second fuel gas is fluidically connected to the second fuel gas supply line 8.

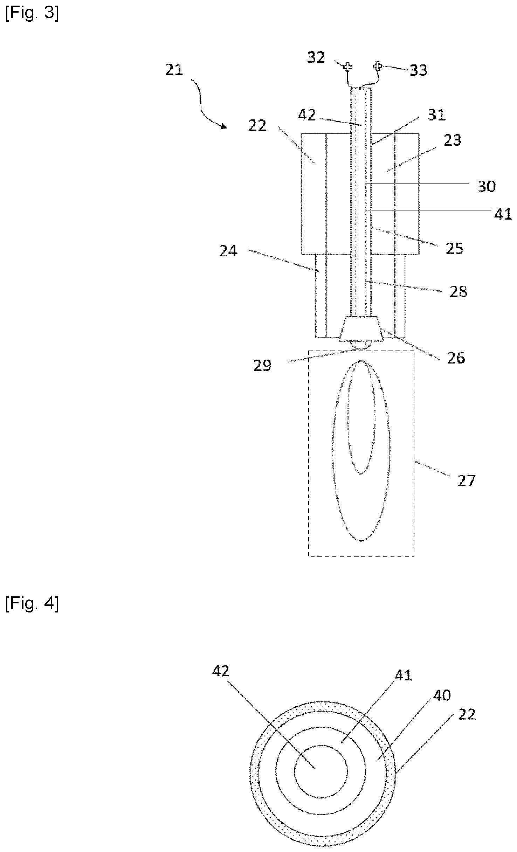

Figure 3 is a schematic view of a burner assembly 21 according to a second embodiment. Here the burner assembly 21 comprises a combustion air supply line 23 surrounding a first fuel gas supply line 25, said first fuel gas supply line 25 surrounding a second fuel gas supply line 28. The first fuel gas supply line 25 and the second fuel gas supply line 28 are forming an inner tube 31 which comprises a circumferential layer 30 forming another tube, said tube forming the second fuel gas supply line 28. The layer is a fluid-tight layer 30. In other words, the combustion air supply line 23, the first fuel gas supply line 25 and the second air supply line 28 are arranged in a co-annular manner. The combustion air supply line 23, the first fuel gas supply line 25 and the second fuel gas supply line 28 are arranged to deliver the combustion air, the first fuel gas and the second fuel gas separately to the combustion chamber 27 in which the combustion of the first and second fuel gas is performed. The burner assembly 21 comprises a flame holder 26 arranged to generate a flame in the combustion chamber 27.

The fuel gas supply lines comprise a fuel gas mixture control device arranged to mix a portion of one of the fuel gas streams with the other fuel gas stream in one of the first or second fuel gas supply line.

The first fuel gas and the second fuel gas exit from the first fuel gas supply line 25 and the second fuel gas supply line 28 by burner tip 29 comprising openings. Each of the burner tip openings is adjusted in size to meet the specific and for combustion optimum velocity requirements of the different fuel gas, before releasing them into the combustion chamber 27 and where the flow of the hydrogen comprised in the second fuel gas is controlled in order to admix a portion of the hydrogen containing fuel gas to the ammonia comprised in the first fuel gas in function of the availability, amount and flow ratio of the two fuel gas.

The first fuel supply line 25, the second fuel supply line 28, the combustion air supply line 23 are arranged in a casing 21.

The burner assembly comprises a heat protection 24 arranged around the supply lines 23, 25, 28, for example a burner tile, said heat protection being configured to protect said lines against external heat.

A flow control device for each fuel gas allows to control the first fuel gas and second fuel gas rates. The first flow control device 32 for the first fuel gas is fluidically connected to the first fuel gas supply line 25, and the second flow control device 33 for the second fuel gas is fluidically connected to the second fuel gas supply line 28.

Figure 4 represents a sectional view of the burner assembly of figure 3. The combustion air supply line has a third flow cross section 40. The first fuel gas supply line has a first flow cross section 41. The second fuel gas supply line has a second flow cross section 42. The third section 40 surrounds the first flow section 41, which surrounds the second flow section 42. In other words, the combustion air supply line, the first fuel gas supply line and the second fuel gas supply line are arranged in a co-annular manner. The casing 22 surrounds the third section.

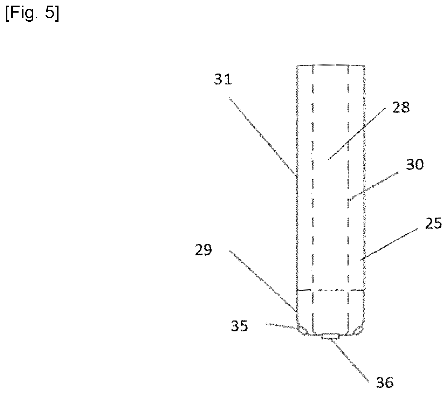

Figure 5 shows the first and second fuel supply lines of the burner assembly of figure 3.

The burner tip 29 comprises openings 35 and 36. The first openings 35 are connected to the first fuel line supply 25 only, and the second openings 36 are connected to the second fuel line supply 28. Each of the burner tip openings is adjusted in size to meet the specific and for combustion optimum velocity requirements of the different fuel gas, before releasing them into the combustion chamber and where the flow of the hydrogen comprised in the second fuel gas is controlled in order to admix a portion of the hydrogen containing fuel gas to the ammonia comprised in the first fuel gas in function of the availability, amount and flow ratio of the two fuel gases. In this embodiment, the first opening is ring shaped.

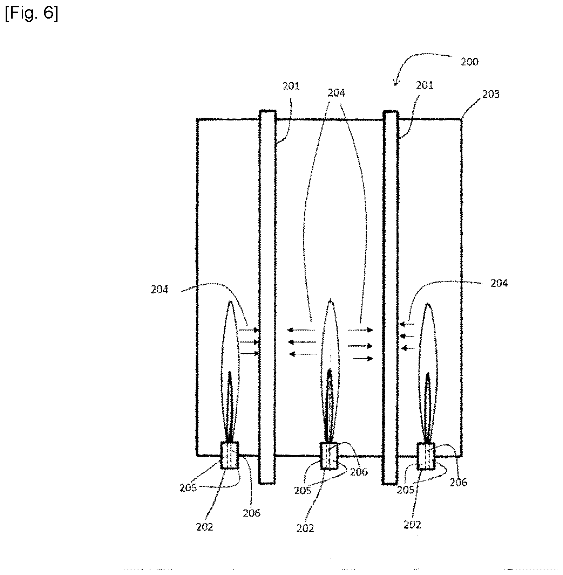

Figure 6 shows a furnace 200 comprising a plurality of burner assemblies as disclosed in figures 2 to 4.

The furnace 200 comprises here a plurality of reactors 201 configured for producing a synthesis gas product comprising hydrogen by an endothermic cracking reaction of an ammonia feedstock stream. The reactors 201 are fluidically arranged parallel to each other

The furnace 200 comprises a plurality of burner assemblies 202 as disclosed previously. which are configured to generate flames and heat the units 201. The burner assemblies 202 comprise here a first fuel supply line 205 arranged to deliver the first fuel gas into the combustion chamber, said first fuel supply line surrounding a second fuel supply line 206 arranged to deliver at least one portion of the second fuel gas into the combustion chamber.

The combustion is performed in a combustion chamber, said combustion being arranged to generate heat and provide said heat to the reactors 201.

## Claims

1. A process (100) for producing a synthesis gas product by an endothermic reaction of a feedstock, said process comprising the following steps:
- Supplying a first fuel gas comprising at least 20% of ammonia at a first flow rate into a combustion chamber (104),
- Supplying a second fuel gas comprising at least 10% of hydrogen at a second flow rate into the combustion chamber (105), at least a first portion of one of the fuel gas being delivered separately from the other fuel gas into the reaction chamber,
- Supplying an oxidizing gas stream (106),
- Performing a combustion (107) of the supplied first fuel gas and the supplied second fuel gas with the supplied oxidizing gas stream in the combustion chamber to provide heat (108) to the endothermic reaction (103).

2. A process (100) according to claim 1, wherein the feedstock is an ammonia feedstock and the endothermic reaction is an endothermic cracking reaction of the ammonia feedstock.

3. A process (100) according to any of claims 1 or 2, wherein the first and the second fuel gas and the oxidizing gas are mixed in the combustion chamber so as to obtain a combustion mix.

4. A process (100) according to any of claims 1 to 3, wherein the process comprises a step of controlling (111) the first flow rate of the first fuel gas and the second flow rate of the second fuel gas.

5. A process (100) according to any of claims 1 to 4, wherein the process comprises a step of supplying a second portion of one of the fuel gas, for example the second fuel gas, along with the other fuel gas, for example the first fuel gas, the second portion of the fuel gas, for example the second fuel gas, being mixed with the other fuel gas, for example the first fuel gas.

6. A process (100) according to any of claims 1 to 5, wherein the step of supplying the second fuel gas (105) comprises delivering at least a first portion of the second fuel gas separately from the first fuel gas into the combustion chamber.

7. A burner assembly (1, 21) for a heat input to an endothermic reaction furnace, the burner assembly comprising:
- At least one oxidizing gas supply line (3, 23) configured to deliver an oxidizing gas stream into a combustion chamber of the furnace,
- Fuel gas supply lines (5, 8, 25, 28) configured to deliver fuel gas to be combusted in the combustion chamber (7, 27) with the oxidizing gas , among which :
∘ A first fuel gas supply line (5, 25) configured to deliver a first fuel gas stream into the combustion chamber (7, 27),
∘ A second fuel gas supply line (8, 28) configured to deliver a second fuel gas stream into the combustion chamber (7, 27), the second fuel gas supply line (8, 28) being configured to deliver the second fuel gas stream separately from the first fuel gas stream into the combustion chamber (7, 27),
∘ A fuel gas mixture control device arranged to mix a portion of one of the fuel gas streams with the other fuel gas stream in one of the first or second fuel gas supply line.

8. A burner assembly (1, 21) according to claim 7, wherein the first fuel gas supply line (5, 25) has a first flow cross section (14, 41) and the second fuel gas supply line (8, 28) has a second flow cross section (15, 42).

9. A burner assembly (1, 21) according to any of claims 7 or 8, wherein the first (5, 25) and the second (8, 28) fuel gas supply lines are separated by a fluid-tight layer (10, 30).

10. A burner assembly (21) according to any of claims 7 to 9, wherein the first (25) and the second (28) fuel gas supply lines are arranged in a co-annular manner.

11. A burner assembly (1, 21) according to any of claims 7 to 10, wherein the oxidizing gas supply line (3, 23) is arranged in a co-annular manner with the first and second fuel gas stream supply lines (5, 8, 25, 28).

12. A burner assembly (1, 21) according to any of claims 7 to 11, wherein the burner assembly (1, 21) comprises a burner tip (9, 29) for releasing the first and second fuel gas into the combustion chamber (7, 27), the first (5, 25) and the second (8, 28) fuel gas supply lines being fluidically connected to the burner tip (9, 29).

13. A burner assembly (1, 21) according to any of claims 7 to 12, wherein the burner tip (9, 29) comprises at least one first opening (35), said first opening being connected to the first fuel gas supply line (5, 25) to release the first fuel gas into the combustion chamber (7, 27).

14. A burner assembly (1, 21) according to any of claims 7 to 13, wherein the burner tip (9, 29) comprises at least one second opening, said second opening (36) being connected to the second fuel gas supply line (8, 28) to release the second fuel gas into the combustion chamber (7, 27).

15. A burner assembly (1, 21) according to any of claims 7 to 14, wherein the burner assembly comprises a first flow rate control device (12, 32) arranged to control a first flow rate of the first fuel gas stream and a second flow rate control device (13, 33) arranged to control a second flow rate of the second fuel gas stream.
